# FASCICULE DE BREVET EUROPEEN

(11) **EP 1 744 163 B1**
(45) Date de publication et mention de la délivrance du brevet: **30.03.2016**
(21) Numéro de dépôt: 06291011.2
(22) Date de dépôt: 21.06.2006
(51) Int. Cl.: G01P 3/487, B64C 25/36

(54) **Tachymètre pour roue d'aéronef**
Geschwindigkeitsaufnehmer für das Rad eines Flugzeugs
Aircraft wheel speed sensor

(30) Priorité: 11.07.2005 FR 0507377
(43) Date de publication de la demande: 17.01.2007
(73) Titulaire: Messier-Bugatti-Dowty, 78140 Vélizy-Villacoublay (FR)
(72) Inventeur: Pradier, Jean-Clair, 78800 Houilles (FR); Lavaud, Thomas, 92190 Meudon (FR)
(74) Mandataire: Parzy, Benjamin Alain

(56) Documents cités:
- FR-A1- 2 275 775
- US-A- 3 600 617
- US-A- 5 190 247
- US-A1- 2001 052 258
- US-A1- 2005 039 531

## Description

L'invention concerne un tachymètre pour roue d'aéronef.

### ARRIERE-PLAN DE L'INVENTION

On connaît des tachymètres pour roue d'aéronef montée sur un essieu pour tourner autour d'un axe de rotation. Les tachymètres comportent une partie fixe destinée à être solidarisée à l'essieu et une partie tournante destinée à être entraînée en rotation par la roue. L'une des parties, en général la partie fixe, comporte un capteur à distance adapté à coopérer avec un élément indicateur porté par l'autre partie pour générer une information de vitesse de rotation de la roue. Le capteur est par exemple du type à réluctance variable.

On connaît du document US 2001/0052258 un tel capteur. Les parties fixe et tournante comportent des portions qui s'étendent en regard l'une de l'autre selon une direction radiale, le capteur à distance et l'élément indicateur étant portés par lesdites portions pour être en regard l'un de l'autre selon une direction radiale. Ici, la portion de la partie tournante qui porte l'élément indicateur s'étend autour de la portion de la partie fixe qui porte le capteur à distance.

On connaît des documents US 2005/0039531, US 5190247, FR 2275775 et US 3600617 d'autres capteurs.

Il faut donc réserver au-delà de l'extrémité de l'essieu un espacé suffisant pour pouvoir installer le capteur et l'élément indicateur, ce qui augmente l'encombrement du tachymètre.

### OBJET DE L'INVENTION

L'invention a pour objet un tachymètre d'encombrement réduit.

### BREVE DESCRIPTION DE L'INVENTION

En vue de la réalisation de ce but, on propose un tachymètre pour roue d'aéronef montée sur un essieu pour tourner autour d'un axe de rotation, le tachymètre comportant une partie fixe destinée à être solidarisée à l'essieu et une partie tournante destinée à être entraînée en rotation par la roue, l'une de la partie fixe ou de la partie tournante comportant un capteur à distance adapté à coopérer avec un élément indicateur porté par l'autre partie en regard du capteur pour générer une information de vitesse de rotation de la roue, les parties ayant des portions qui s'étendent en regard l'une de l'autre selon une direction radiale, le capteur à distance et l'élément indicateur étant portés par les portions pour être en regard l'un de l'autre selon une direction radiale. Selon l'invention, la portion solidaire de la partie tournante s'étend en service à l'intérieur de l'essieu, de sorte que le capteur et l'élément indicateur s'étendent au moins partiellement dans l'essieu.

Ainsi, le capteur et l'élément indicateur peuvent être disposés au moins partiellement à l'intérieur de l'essieu, ce qui diminue l'encombrement axial du tachymètre de l'invention.

### BREVE DESCRIPTION DES DESSINS

L'invention sera mieux comprise à la lumière de la description qui suit en référence aux figures des dessins annexés parmi lesquelles :
- la figure 1 est une vue en coupe longitudinale d'un essieu d'aéronef équipé d'une roue et du tachymètre selon l'invention ;
- la figure 2 est une vue en perspective partielle de la roue de la figure 1.

### DESCRIPTION DETAILLEE DE L'INVENTION

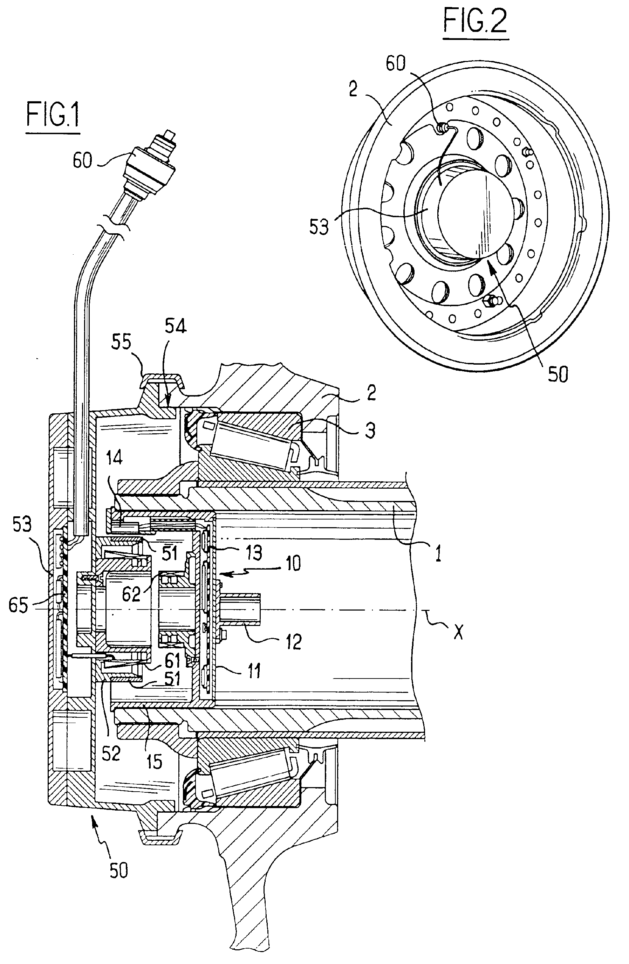

En référence à la figure 1, le tachymètre de l'invention est destiné à être monté au bout d'un essieu 1 d'aéronef. L'essieu 1 reçoit une roue 2 d'aéronef dont on aperçoit ici une portion de la jante. La roue est guidée en rotation sur l'essieu par des roulements à rouleaux coniques 3 (on voit ici le roulement externe) pour permettre une rotation de la roue 2 autour d'un axe X confondu avec l'axe de symétrie de l'essieu 1.

Le tachymètre comprend une partie fixe 10 insérée dans l'extrémité de l'essieu 1 et qui est arrêtée en rotation par un moyen d'arrêt non représenté ici (par exemple une vis). A cet effet, la partie fixe 10 comporte une portion cylindrique 15 creuse qui s'étend intégralement dans l'essieu 1 et qui forme un organe de centrage de la partie fixe 10 sur l'essieu 1.

La partie fixe 10 comporte une cloison de fond 11 recevant un connecteur 12 adapté à recevoir un connecteur homologue (pour connecter le tachymètre aux systèmes de l'aéronef par l'intermédiaire d'un câble transitant à l'intérieur de l'essieu 1).

Le connecteur 12 est relié à une carte à circuit imprimé 13 qui porte l'électronique de traitement des signaux du tachymètre et qui est logée dans un compartiment qui s'étend derrière la cloison de fond 11.

La carte à circuit imprimé 13 est reliée à un capteur à effet Hall 14 qui est disposé dans un logement en bout de la portion cylindrique 15 creuse de la partie fixe 10 et qui présente une zone de détection tournée vers l'axe X, selon une direction radiale.

Le tachymètre comprend en outre une partie tournante 50 qui, selon l'invention, est fixée à la roue 2.

La partie tournante 50 comporte des cibles magnétiques 51, ici des aimants permanents, qui sont portés sur la surface cylindrique externe d'une portion cylindrique 52 de la partie tournante 50 qui pénètre dans la partie fixe 10 pour être en regard de la portion cylindrique 15 de la partie fixe 10 selon une direction radiale de sorte que les cibles magnétiques 51 soient en regard du capteur à effet Hall 14 selon une direction radiale. La portion cylindrique 52 est solidaire d'une structure formant capot 53 qui protège l'extrémité de l'essieu 1 et qui forme la portion extérieurement visible du tachymètre, comme cela peut être constaté à la figure 2. Le capot 53 et la portion cylindrique 52 sont essentiellement de révolution et s'étendent selon un même axe de révolution.

Selon l'invention, le capot 53 est rapporté sur la roue 2 et comporte à cet effet une portée cylindrique 54 qui coopère avec une portée homologue de la roue 2 pour centrer le capot 53 vis à vis de la roue 2, et donc centrer la portion cylindrique 52 sur l'axe de rotation X. La partie tournante 50 est fixée et arrêtée en rotation sur la roue 2 au moyen d'un collier de serrage périphérique 55 enserrant ensemble une portée conique du capot 53 et une portée conique symétrique de la jante de la roue 2.

Le centrage du capot 53 sur la roue 2 permet de centrer la partie tournante 50 et la partie fixe 10 sur le même axe X, sans qu'aucun dispositif de guidage en rotation ne s'étende entre la partie fixe 10 et la partie tournante 50. La partie fixe 10 et la partie tournante 50 constituent ainsi deux éléments autonomes pouvant être montées indépendamment l'une de l'autre sur l'élément (roue, essieu) associé. Le tachymètre de l'invention est ainsi plus simple et donc moins onéreux à produire que les tachymètres existants.

En fonctionnement, le passage des cibles magnétiques 51 devant le capteur à effet hall 14 permet de générer une information de vitesse de rotation de la roue 2 selon un procédé connu en soi. Compte tenu des dimensions des roues d'aéronef et des tolérances de centrage, il est possible de garantir entre le capteur 14 et les cibles magnétiques une distance déterminée avec une tolérance de l'ordre d'un millimètre, ce qui suffit largement pour garantir un bon fonctionnement du capteur 14.

L'incertitude de position axiale entre la partie tournante et la partie fixe peut être importante, de l'ordre de quelques millimètres. La coopération selon une direction radiale du capteur 14 et des cibles magnétiques 51 permet de diminuer considérablement la sensibilité du tachymètre au positionnement axial de la partie tournante 50 par rapport à la partie fixe 10. Pour supprimer cette sensibilité, il suffit, comme illustré, de donner aux cibles magnétiques 51 une extension axiale telle que, quelque soit le positionnement axial de la partie tournante par rapport à la partie fixe (dans la limite de la plage des positions possibles), les cibles magnétiques 51 restent toujours en regard du capteur 14 selon une direction radiale.

Selon l'invention, le capteur 14 est porté par la portion cylindrique 15 de sorte qu'il s'étende sensiblement à l'extrémité de l'essieu 1. La portion cylindrique 52 de la partie tournante 50 pénètre dans l'essieu 1 pour être en regard de la portion cylindrique 15 de la partie fixe 10 et porte les aimants 51 en regard du capteur 14, c'est-à-dire intérieurement à l'essieu 1.

Ainsi, l'ensemble formé par le capteur 14 et les aimants 51 est logé dans l'essieu 1, ce qui permet de réduire l'encombrement axial du tachymètre de l'invention.

Selon un aspect particulier de l'invention, la partie tournante comporte un capteur auxiliaire de pression 60 de type piézoélectrique qui s'étend en extrémité d'un câble saillant du capot 53 et qui, comme cela est visible à la figure 2, est fiché dans la jante 2 de la roue pour mesurer la pression régnant dans le pneumatique (non visible ici) porté par la jante.

L'élément piézoélectrique du capteur de pression 60 est relié à un circuit électronique 65 disposé dans la partie tournante 50. Le circuit électronique 65 est relié à une première bobine 61 portée intérieurement par le capot 53 et qui s'étend à proximité d'une deuxième bobine 62 homologue qui est elle portée par la partie fixe 10 en état électriquement reliée à la carte à circuit imprimé 13.

La première bobine 61 forme avec le capteur de pression 60 et le circuit électronique 65 un circuit fermé de sorte que les caractéristiques électromagnétiques de la première bobine 61 dépendent de l'état électrique du capteur de pression 60 et donc de la pression régnant dans le pneumatique.

Les deux bobines 61,62 sont en interaction électromagnétique. En fonctionnement, la deuxième bobine 62 est alimentée et la tension aux bornes de la deuxième bobine 62 dépend des caractéristiques électromagnétiques de la première bobine 61 et donc de la pression dans le pneumatique. La tension aux bornes de la deuxième bobine 62 constitue ainsi un signal représentatif de la pression régnant dans le pneumatique.

Le signal de pression, comme le signal de vitesse, est ainsi généré sans aucun contact ni guidage entre la partie fixe 10 et la partie tournante 50 du tachymètre.

L'invention n'est pas limitée à ce qui vient d'être décrit, mais bien au contraire englobe toute variante entrant dans le cadre défini par les revendications.

En particulier, bien que l'on ait illustré un tachymètre avec un capteur de vitesse de rotation monté sur la partie fixe pour coopérer à distance avec un élément indicateur (les cibles électromagnétiques) porté par la partie tournante, on pourra bien sûr monter le capteur sur la partie tournante et l'élément indicateur sur la partie fixe. On pourra également prévoir plus d'un capteur, pour assurer une redondance de l'information de vitesse de rotation.

Bien que l'on ait précisé que le capteur de vitesse de rotation est un capteur magnétique du type à effet Hall, d'autres capteurs sans contact pourront être utilisées, comme par exemple un capteur magnétique du type magnétorésistif ou magnétostrictif, ou encore un capteur optique.

Bien que l'on ait illustré un tachymètre équipé d'un capteur auxiliaire de pression, le tachymètre de l'invention n'est pas limitée à cette disposition particulière et pourra ne comporter aucun capteur auxiliaire, ou encore comporter d'autres types de capteurs auxiliaires, comme par exemple des jauges de contraintes pour mesurer une flexion de l'essieu.

Bien que les moyens de centrage de la partie tournante sur la roue comportent ici une portée de centrage cylindrique, tout autre organe de centrage pourra être envisagé, comme par exemple une portée de centrage conique ou encore un positionnement par pions adapté à assurer un centrage de la partie tournante sur la roue.

De même, bien que les moyens d'entraînement en rotation comportent ici un collier de serrage, tout autre organe d'entraînement pourra être envisagé, comme par exemple un toc ou des vis de fixation.

Enfin, bien que l'on ait indiqué que la portion de la partie tournante qui s'étend dans l'essieu pour porter l'un du capteur ou de l'élément indicateur s'étend intérieurement à la portion en regard de la partie fixe (constituée ici de la portion cylindrique qui sert à centrer la partie fixe sur l'essieu), on pourra prévoir, au contraire, que la portion de la partie fixe qui porte l'autre du capteur ou de l'élément indicateur s'étende à l'intérieur de la portion en regard de la partie tournante. Dans ce cas, la portion de la partie fixe ne pourra plus servir à centrer la partie fixe sur l'essieu. La partie fixe devra alors comporter un organe de centrage distinct de ladite portion.

## Revendications

1. Tachymètre pour roue (2) d'aéronef montée sur un essieu (1) pour tourner autour d'un axe de rotation (X), le tachymètre comportant une partie fixe (10) destinée à être solidarisée à l'essieu et une partie tournante (50) destinée à être fixée à la roue (2) pour tourner avec celle-ci, la partie fixe et la partie tournante constituant deux éléments autonomes, l'une de la partie fixe ou de la partie tournante comportant un capteur à distance (14) adapté à coopérer avec un élément indicateur (51) porté par l'autre partie en regard du capteur pour générer une information de vitesse de rotation de la roue, les parties ayant des portions (15,52) qui s'étendent en regard l'une de l'autre selon une direction radiale, le capteur à distance (14) et l'élément indicateur (51) étant portés par les portions pour être en regard l'un de l'autre selon une direction radiale, **caractérisé en ce que** la portion (52) solidaire de la partie tournante (50) s'étend en service à l'intérieur de l'essieu (1), de sorte que le capteur et l'élément indicateur s'étendent au moins partiellement dans l'essieu.

2. Tachymètre selon la revendication 1, dans lequel la portion solidaire de la partie tournante s'étend à l'intérieur de la portion de la partie fixe.

3. Tachymètre selon la revendication 2, dans lequel la portion de la partie fixe est adaptée à porter le capteur ou l'élément indicateur sensiblement à l'extrémité de l'essieu (1).

4. Tachymètre selon la revendication 1, dans lequel la partie tournante (50) comporte un capot (53) de protection de l'essieu sur lequel s'étend une portée de centrage (54) adaptée à coopérer avec une portée de centrage homologue de la roue (2).

5. Tachymètre selon la revendication 4, comportant un collier de serrage (55) coopérant avec des portées coniques du capot (53) et de la roue (2) pour fixer le capot (53) sur la roue (2).

6. Tachymètre selon la revendication 1, dans lequel le capteur (14) est du type magnétique et l'élément indicateur comporte une pluralité de cibles magnétiques (51).

7. Tachymètre selon la revendication 1, dans lequel le capteur (14) est porté par la partie fixe (10) tandis que l'élément indicateur (51) est porté par la partie tournante (50), le capteur (14) étant électriquement relié à une électronique (13) portée par la partie fixe.

8. Tachymètre selon la revendication 1, **caractérisé en ce que** la partie tournante (50) porte un capteur de pression (60) qui est électriquement relié à une première bobine (61) portée par la partie tournante pour s'étendre à proximité d'une deuxième bobine (62) portée par la partie fixe (10), le capteur de pression étant apte à influencer des caractéristiques électromagnétiques de la première bobine (61).

9. Tachymètre selon la revendication 8, dans lequel le capteur de pression (60) est relié à une électronique (65) portée par la partie tournante.

10. Tachymètre selon la revendication 8, dans lequel la deuxième bobine (62) est reliée à une électronique (13) portée par la partie fixe (10).

## Patentansprüche

1. Geschwindigkeitsmesser für ein Luftfahrzeugrad (2), das an einer Radachse (1) drehbar um eine Drehachse (X) gelagert ist, wobei der Geschwindigkeitsmesser einen feststehenden Teil (10) umfasst, der dazu bestimmt ist, fest mit der Radachse verbunden zu werden, sowie einen sich drehenden Teil (50), der dazu bestimmt ist, am Rad (2) befestigt zu werden, um sich mit demselben zu drehen, wobei der feststehende Teil und der sich drehende Teil zwei autonome Elemente darstellen, wobei entweder der feststehende Teil oder der sich drehende Teil einen Abstandssensor (14) umfasst, der dazu geeignet ist, mit einem Anzeigeelement (51) zusammenzuwirken, das von dem anderen Teil dem Sensor gegenüberliegend getragen wird, um eine Drehgeschwindigkeitsinformation des Rades zu erzeugen, wobei die Teile Abschnitte (15, 52) haben, die sich in radialer Richtung einander gegenüberliegend erstrecken, wobei der Abstandssensor (14) und das Anzeigeelement (51) von den Abschnitten getragen werden, um in radialer Richtung einander gegenüberliegend zu sein, **dadurch gekennzeichnet, dass** sich der fest mit dem sich drehenden Teil (50) verbundene Abschnitt (52) im Betrieb im Inneren der Radachse (1) erstreckt, so dass sich der Sensor und das Anzeigeelement zumindest teilweise in der Radachse erstrecken.

2. Geschwindigkeitsmesser nach Anspruch 1, wobei sich der fest mit dem sich drehenden Teil verbundene Abschnitt im Inneren des Abschnittes des feststehenden Teils erstreckt.

3. Geschwindigkeitsmesser nach Anspruch 2, wobei der Abschnitt des feststehenden Teils dazu geeignet ist, den Sensor oder das Anzeigeelement im Wesentlichen am Ende der Radachse (1) zu tragen.

4. Geschwindigkeitsmesser nach Anspruch 1, wobei der sich drehende Teil (50) eine Abdeckung (53) zum Schutz der Radachse umfasst, an der sich eine Zentrierung (54) erstreckt, die dazu geeignet ist, mit einer entsprechenden Zentrierung des Rades (2) zusammenzuwirken.

5. Geschwindigkeitsmesser nach Anspruch 4, umfassend eine Schelle (55), die mit konischen Auflageflächen der Abdeckung (53) und des Rades (2) zusammenwirkt, um die Abdeckung (53) an dem Rad (2) zu befestigen.

6. Geschwindigkeitsmesser nach Anspruch 1, wobei der Sensor (14) magnetischer Art ist und das Anzeigeelement eine Vielzahl von magnetischen Zielen umfasst.

7. Geschwindigkeitsmesser nach Anspruch 1, wobei der Sensor (14) von dem feststehenden Teil (10) getragen wird, während das Anzeigeelement (51) von dem sich drehenden Teil (50) getragen wird, wobei der Sensor (14) elektrisch mit einer Elektronik (13) verbunden ist, die von dem feststehenden Teil getragen wird.

8. Geschwindigkeitsmesser nach Anspruch 1, **dadurch gekennzeichnet, dass** der sich drehende Teil (50) einen Drucksensor (60) trägt, der elektrisch mit einer ersten Spule (61) verbunden ist, die von dem sich drehenden Teil getragen wird, um sich nahe einer zweiten Spule (62) zu erstrecken, die von dem feststehenden Teil (10) getragen wird, wobei der Drucksensor dazu geeignet ist, die elektromagnetischen Eigenschaften der ersten Spule (61) zu beeinflussen.

9. Geschwindigkeitsmesser nach Anspruch 8, wobei der Drucksensor (60) mit einer von dem sich drehenden Teil getragenen Elektronik (65) verbunden ist.

10. Geschwindigkeitsmesser nach Anspruch 8, wobei die zweite Spule (62) mit einer von dem feststehenden Teil getragenen Elektronik (13) verbunden ist.

## Claims

1. A tachometer for an aircraft wheel mounted on an axle to rotate about an axis of rotation, the tachometer comprising a stationary part to be secured to the axle and an independent rotary part to be secured to the wheel, wherein the stationary part and the rotary part are mountable independently on the axle and on the wheel, respectively, said stationary part and said rotary part having portions facing each other in a radial direction, one of said portions carrying a sensor and another one of said portions carrying an indicator element, so that said sensor and said indicator element are in register in a radial direction and cooperate for generating a signal indicative of a rotation speed of the rotary part, and wherein the portion of the rotary part extends inside the axle when the rotary part is mounted on the wheel so that the indicator element and the sensor extend at least partially inside the axle.

2. A tachometer according to claim 1, in which the portion secured to the rotary part extends inside the portion of the stationary part.

3. A tachometer according to claim 2, in which the portion of the stationary part is adapted to carry the sensor or the indicator element substantially at the end of the axle.

4. A tachometer according to claim 1, in which the rotary part comprises a protective cap for the axle, a centering bearing surface extending on said cap and being adapted to co-operate with a similar centering bearing surface of the wheel.

5. A tachometer according to claim 4, comprising a clamping collar co-operating with the conical bearing surfaces of the cap and of the wheel to fasten the cap on the wheel.

6. A tachometer according to claim 1, in which the sensor is of the magnetic type and the indicator element comprises a plurality of magnetic targets.

7. A tachometer according to claim 1, in which the sensor is carried by the stationary part while the indicator element is carried by the rotary part, the sensor being electrically connected to electronics carried by the stationary part.

8. A tachometer according to claim 1, wherein the rotary part carries a pressure sensor which is electrically connected to a first coil carried by the rotary part in order to extend in the proximity of a second coil carried by the stationary part, the pressure sensor being suitable for influencing the electromagnetic characteristics of the first coil.

9. A tachometer according to claim 8, in which the pressure sensor is connected to electronics carried by the rotary part.

10. A tachometer according to claim 8, in which the second coil is connected to electronics carried by the stationary part.
